# EUROPÄISCHE PATENTSCHRIFT

(11) **EP 1 716 195 B1**
(45) Veröffentlichungstag und Bekanntmachung des Hinweises auf die Patenterteilung: **08.07.2015**
(21) Anmeldenummer: 04804155.2
(22) Anmeldetag: 22.12.2004
(51) Int. Cl.: C08G 59/52, C08G 59/62

(54) **MEHRKOMPONENTENKIT FÜR BEFESTIGUNGSZWECKE UND DESSEN VERWENDUNG**
MULTICOMPONENT KIT FOR FASTENING PURPOSES AND THE USE THEREOF
KIT A PLUSIEURS COMPOSANTS UTILISE A DES FINS DE FIXATION ET SON UTILISATION

(30) Priorität: 19.02.2004 DE 102004008464
(43) Veröffentlichungstag der Anmeldung: 02.11.2006
(73) Patentinhaber: fischerwerke GmbH & Co. KG, 72178 Waldachtal (DE)
(72) Erfinder: VOGEL, Martin, 79286 Glottertal (DE); GRÜN, Jürgen, 79268 Bötzingen (DE); WASMER, Elke, 79312 Emmendingen (DE); SCHLENK, Christian, 79211 Denzlingen (DE); SCHÄTZLE, Joachim, 79341 Kenzingen (DE)
(86) Internationale Anmeldenummer: PCT/EP2004/014559
(87) Internationale Veröffentlichungsnummer: WO 2005/090433

(56) Entgegenhaltungen:
- EP-A- 0 003 479
- EP-A- 0 601 668
- DE-A- 3 124 232
- US-A- 5 578 685

## Beschreibung

Die Erfindung betrifft ein Mehrkomponentenkit für eine härtbare Masse für Befestigungszwecke umfassend eine Epoxidkomponente (a), die härtbare Epoxide beinhaltet, und eine Härterkomponente (b), welche eine Mannichbasenformulierung umfasst, sowie die Verwendung von Mannichbasenformulierungen und insbesondere weiteren Zusätzen in Härterkomponenten für Epoxidharze.

Härtbare Zwei-Komponenten-Massen auf Epoxidbasis sind grundsätzlich bekannt. Beispielsweise werden sie zur Herstellung von Lacken, von Überzügen, als Formmassen und dergleichen verwendet.

Auch im Bereich des Befestigungswesens, beispielsweise zur Befestigung von Verankerungsmitteln, wie Ankerstangen, sind Zwei-Komponenten-Mörtelmassen auf der Grundlage von Epoxidharzen und Aminhärtern bekannt.

Nachteilig an den bekannten Epoxidharzen ist insbesondere, dass diese nur in einem vergleichsweise engen Temperaturbereich angewendet werden können, da sonst die Härtung nicht ausreichend rasch und vollständig vor sich geht, und auch die Temperaturspanne zur Anwendung der ausgehärteten Massen (Temperatur-Toleranzbereich) geringer ist als beispielsweise bei UP- oder vinylesterbasierten Harzen. Beispielsweise ist bei den Epoxidharzen nach dem Stand der Technik eine Untergrundtemperatur zwischen +5 und +40 °C erforderlich, während bei UP- und Vinylesterharzen auch Temperaturen bis herunter zur - 10 °C noch toleriert werden können, und der Temperatur-Toleranzbereich für die ausgehärteten Produkte liegt zwischen -40 °C und +50 °C, während dies bei Vinylesterprodukten -40 bis +100 °C und bei UP-Produkten -40 bis 80 °C sind. Die DE 100 02 605 stellt hier Zwei-Komponenten-Systeme zur Verfügung, deren Mörtelkomponente sich auf der Verwendung von vernetzenden, funktionelle Epoxygruppen aufweisenden Reaktivverdünnern mit einer Epoxyfunktionalität von mindestens 2 basiert. Doch werden auch hier bei den resultierenden Mörteln ausreichend hohe Lastwerte lediglich im Bereich von -5 bis +60 °C gefunden.

Die EP 0 601 668 A beschreibt eine Epoxidharz-Zusammensetzung aus einem Epoxidharz, einem Aminhärter und einem Reaktionsbeschleuniger für Beschichtungsmittel. Es kann vorgesehen sein, dass als Härterkomponente eine Mannichbase verwendet wird, wobei die Mannichbase durch eine Reaktion von meta-Xylylendiamin mit Bisphenol A und Formaldehyd im Verhältnis 2.5:1:1 hergestellt ist. Die Verwendung einer derartigen Mannichbasen-Formulierung ist zur Verwendung in Beschichtungen vorgesehen und weist Eigenschaften auf, welche die Zusammensetzung ungeeignet als härtbare Masse zu Befestigungszwecken machen, um beispielsweise geeignete Verbundspannung zu erzielen.

Aufgabe der vorliegenden Erfindung ist daher, neue Zweikomponenten-Epoxidharze für Befestigungszwecke zur Verfügung zu stellen, die gegenüber den bisher bekannten Epoxidharzen vorteilhafte Eigenschaften aufweisen, wie eine höhere Verbundspannung gegenüber der Zusammensetzung aus EP 0 601 668 A.

Überraschend wurde nun gefunden, dass dieses Ziel erreicht werden kann durch die Verwendung von speziellen Mannichbasenformulierungen als Aminhärter, wobei diese Mannichbasenformulierungen ganz bestimmte Eigenschaften haben.

Die Erfindung betrifft ein Mehrkomponentenkit, wie eingangs beschrieben, dadurch gekennzeichnet, dass die Mannichbasenformulierung H-Äquivalente im Bereich von 40 bis 80, bei Messung mit einem Brookfield Rotationsviskosimeter mit Spindel 3 bei 23 °C und bei 10 bis 50 U/min eine Viskosität im Bereich von 500 bis 2700 mPas und einen Gehalt an freien Phenolderivaten von 20 Gew.-% oder weniger aufweist.

Gegenüber bisher eingesetzten Mannichbasenformulierungen aus dem Stand der Technik, die durch Abweichen in mindestens einem, vorzugsweise zwei, insbesondere allen der genannten Parameter nicht unter diese Definition fallen, weisen die erfindungsgemäß herstellbaren Mehr-Komponenten-Mörtel eine deutlich höhere Verbundspannung nach dem Aushärten auch bei höheren Temperaturen, wie bei 80 °C, auf, so dass sie auch bei dieser Temperatur noch verwendbar sind. Darüber hinaus weisen sie auch bei Aushärten bei -5 °C in der Regel bessere, mindestens jedoch gleich gute Verbundspannungen auf im Vergleich mit Mörteln, die unter Verwendung von bisher eingesetzten Mannichbasenformulierungen aus dem Stand der Technik hergestellt werden.

Die Messung der Viskositäten wird dabei mit einem Brookfield Rotationsviskosimeter mit Spindel 3 bei 23 °C durchgeführt bei 10 bis 50, vorzugsweise 10 U/min.

Anstelle des Begriffs "härtbare Masse" wird nachstehend auch teilweise der Begriff "Mörteln" verwendet.

Unter einem Mehrkomponentenkit ist insbesondere ein Zweikomponentenkit (vorzugsweise ein Zweikomponentenkit mit den Komponenten (a) und (b)), vorzugsweise eine Zwei- oder ferner Mehrkammervorrichtung, zu verstehen, worin die miteinander reaktionsfähigen Komponenten (a) und (b) so enthalten sind, dass sie während der Lagerung nicht miteinander reagieren können, vorzugsweise so, dass sie vor der Anwendung nicht miteinander in Berührung kommen. Besonders geeignet sind Patronen, beispielsweise aus Kunststoff, Keramik oder insbesondere Glas, in denen die Komponenten durch (beispielsweise bei Eintreiben eines Verankerungsmittels in eine Aussparung, wie ein Bohrloch) zerstörbare Abgrenzungswände voneinander getrennt angeordnet sind, beispielsweise als ineinander verschachtelte Patronen, wie Ampullen; Folienbeutel mit zwei oder mehr Kammern, oder Behältnisse wie Eimer oder Wannen mit mehreren Kammern oder Sets (z.B. Gebinde) von zwei oder mehr derartigen Behältnissen wobei zwei oder mehr Komponenten der jeweiligen härtbaren Masse, Insbesondere zwei Komponenten (a) und (b) wie oben und unten definiert, jeweils räumlich voneinander getrennt als Kit oder Set vorliegen, bei denen der Inhalt nach Vermischen oder unter Vermischen auf die Anwendungsstelle (insbesondere mittels Geräten zum Auftragen wie Spachteln oder Pinseln oder eines Statikmischers), beispielsweise eine Fläche zum Befestigen von Fasern, Gelegen, Geweben, Composites oder dergleichen, oder in eine Aussparung, wie ein Bohrloch, insbesondere zum Befestigen von Verankerungsmitteln wie Ankerstangen oder dergleichen, verbracht wird; sowie Mehr- oder insbesondere Zweikomponentenkartuschen, in deren Kammem die mehreren oder vorzugsweise zwei Komponenten (insbesondere (a) und (b)) für eine härtbare Masse für Befestigungszwecke mit oben und nachstehend genannten Zusammensetzungen zur Aufbewahrung vor der Nutzung enthalten sind, wobei vorzugsweise auch ein Statikmischer zum entsprechenden Kit gehört. In den Fällen der Folienbeutel und der Mehrkomponentenkartuschen kann auch eine Vorrichtung zum Entleeren zum Mehrkomponentenkit gehören, doch kann diese vorzugsweise auch (beispielsweise zur mehrfachen Verwendung) unabhängig vom Kit sein.

Nachfolgend bedeuten Anteils- oder Gehaltsangaben in Prozent jeweils Gewichtsprozent, soweit nicht anders angegeben.

Als vorteilhaft hat sich erwiesen, wenn in einem erfindungsgemäßen Mehrkomponentenkit die Mannichbasenformulierung, für sich betrachtet, einen Gehalt an freien Aminen von 35 % oder mehr hat. Freie Amine heißt monomere (oder allgemeiner nicht als Mannichbasen verarbeitete, die auch noch übrige Aminogruppen enthalten könnten) Amine, beispielsweise wie unten als Polyamine definiert, wie insbesondere m-Xylylendiamin.

Beispielsweise ist ein Mehr-, insbesondere Zweikomponentenkit , wie vor- und insbesondere nachstehend beschrieben, eine mögliche bevorzugte Ausführungsform, worin, bezogen auf das Gesamtgewicht der Mannichbasenformulierung, die darin beinhalteten Mannichbasen einen Anteil von 10 bis 55, vorzugsweise von 15 bis 25 % haben.

Bei Mehrkomponentenkits, wie vor- oder nachstehend beschrieben, die Flexibilisatoren (härtungsunterstützende Komponenten) wie Benzylalkohol beinhalten, hat es sich als günstig erwiesen, wenn der Gehalt an diesen Substanzen in der Mannichbasenformulierung bei 20 % oder weniger liegt, beispielsweise zwischen 0,5 und 20 % bezogen auf das Gewicht der Mannichbasenformulierung selbst.

Die für die erfindungsgemäßen Mehrkomponentenkits verwendeten Mannlchbasenformulierungen werden vorteilhaft hergestellt, indem zunächst die Mannichbase durch die Reaktion von (i) Phenolderivaten, worunter vorzugsweise aromatische Di- oder Polyole, insbesondere Bisphenole, wie insbesondere Bisphenol F oder vor allem Bisphenol A, zu verstehen sind, mit (ii) Polyaminen, vorzugsweise monomeren aliphatischen, aromatischen oder in erster Linie araliphatischen Diaminen, wie insbesondere Xylylendiaminen, vor allem m-Xylylendiamin (1,3-Bis(aminomethyl)benzol); aliphatischen Polyaminen, beispielsweise C1-C10-Alkanndi- oder -polyaminen, z.B. 1,2-Diaminoethan, Trimethylhexan-1,6-diamin, Diethylentriamin oder Triethylenamin; cycloaliphatischen Aminen, wie 1,2-Diaminocyclohexan oder Bis(aminomethyl)tricyclodecan oder Bis(4-aminocyclohexyl)methan, oder Aminaddukte; oderGemischen von 2 oder mehr davon; insbesondere Gemischen eines oder mehrerer araliphatischer Diamine, vor allem m-Xylylendiamin, mit einem oder mehreren anderen Polyaminen, oder vor allem ein oder mehrere araliphatische Diamine, insbesondere m-Xylylendiamin selbst; (wobei die Phenolderivate und die Polyamine vorteilhaft bei erhöhter Temperatur zunächst vorgemischt werden, beispielsweise oberhalb der Schmelztemperatur der entsprechenden Mischung, z.B. bei ca. 80 bis 150 °C), und (iii) Aldehyden, vor allem aliphatischen Aldehyden, wie insbesondere Formaldehyd (wobei dieser Begriff auch Vorläufer wie Trioxan oder Paraformaldehyd einschließen kann), hergestellt wird, wobei die Aldehyde vorteilhaft als wässrige Lösung (insbesondere bei erhöhter Temperatur, wie bei 50 bis 90 °C) zu- und umgesetzt wird (insbesondere unter Zugabe zu einem wie vorstehend erhältlichen Gemisch aus Phenolderivaten und Polyaminen), und anschließend zur Herstellung der Mannichbasen das Reaktionsgemisch weiter (zur Verschiebung des chemischen Gleichgewichts durch Entfernung von Wasser vorteilhaft unter (üblicherweise technischem) Vakuum) erwärmt wird, vorzugsweise auf Temperaturen zwischen 70 und 150, wie auf 90 bis 120°C); und abschließend zur Herstellung einer Mannichbasenformulierung für ein erfindungsgemäßes Zweikomponentenkit die Mannichbase, falls dies nicht erst später bei der Zusammenstellung der Komponente (b) erfolgt, mit weiterem freiem Polyamin (freies Amin) und gewünschtenfalls einem inerten Verdünnungsmittel, beispielsweise einem Lösungsmittel oder Lösungsmittelgemisch, beispielsweise einem Kohlenwasserstoffgemisch oder einem Alkohol, insbesondere Benzylakohol, auf die gewünschte Verdünnung einstellt, wobei dies auch ganz oder teilweise erst durch Zufügung zu den übrigen Bestandteilen der Komponente (b) erfolgen kann, so dass erst dann alle Bestandteile der jeweiligen Mannichbasenformulierung in einer Masse vorliegen. Die vorstehenden bevorzugten Definitionen von Phenolderivaten, Polyphenolen und Aldehyden können auch an anderen Stellen der vorliegenden Beschreibung eingefügt werden, wo diese Begriffe vorkommen, um bevorzugte Ausführungsformen der Erfindung zu präzisieren. Umgekehrt werden die Reaktanden und inerte Verdünnungsmittel vorzugsweise in solchen Mengen angewendet, dass die vor- und nachstehend als bevorzugt genannten Mengenverhältnisse erzielt werden.

Vorteilhaft liegt zur Herstellung der Mannichbase das molare Verhältnis (vor der nachfolgenden Zugabe weiteren freien Polyamins und gegebenenfalls Lösungsmittels) der Komponenten Phenolderivat zu Polyamin bei 1 zu 20 bis 20 zu 1, insbesondere 1 zu 5 bis 5 zu 1, und das der Komponenten Polyamin zu Formaldehyd bei 10 zu 1 bis 1 zu 10, insbesondere bei 2 zu 1 bis 1 zu 2, besonders vorteilhaft bei 1 zu 1.

Die Erfindung betrifft daher in einer weiteren bevorzugten Ausführungsform ein Mehrkomponentenkit wie oben oder unten genannt, dadurch gekennzeichnet, dass die für die Mannichbasenformulierung verwendete Mannichbase aus Phenolderivaten, vorzugsweise Bisphenolen, insbesondere Bisphenol A; Polyaminen, vorzugsweise aralpihatischen Diaminen, insbesondere m-Xylylendiamin, aliphatischen Aminen und/oder cycloaliphatischen Aminen, und Aldehyden, insbesondere Formaldehyd, erhältlich ist, vorzugsweise unter den vorstehenden, beispielsweise unter den in Beispiel 2 genannten Bedingungen und mit den jeweils dort genannten, insbesondere bevorzugten, Reagentien.

Besonders gute Ergebnisse werden erzielt, wenn die für ein Mehrkomponentenkit, wie oben und nachfolgend beschrieben, verwendete Mannichbase unter Abreaktion der Phenolderivate von bis auf 20, vorzugsweise 15 Gew.-% der Phenolderivate, oder weniger hergestellt ist.

Dies gilt auch, wenn für ein Mehrkomponentenkit wie vor- und nachstehend definiert bei der Herstellung der Mannichbasen ein araliphatisches Diamin, insbesondere m-Xylylendiamin, ein aliphatisches oder ein cycloaliphatisches Diamin, oder Kombinationen von zwei oder mehr davon, verwendet werden.

Besonders bevorzugt ist auch ein Mehrkomponentenkit wie vor- und nachstehend beschrieben, dadurch gekennzeichnet, dass die Mannichbasenformulierung H-Äquivalente im Bereich von 45 bis 75, bei Messung mit einem Brookfield Rotationsviskosimeter mit Spindel 3 bei 23 °C und bei 10 bis 50 U/min eine Viskosität im Bereich von 1000 bis 2000 mPa·s, und einen Gehalt an freien Phenolderivaten von 20 Gew.-% oder weniger hat.

In dem Mehrkomponentenkit, insbesondere Zweikomponentenkit, wie vor- und nachstehend beschrieben, liegt in einer günstigen Ausführungsform der Erfindung das Gewichtsverhältnis der Komponenten (a) zu (b) bei 10 zu 1 oder weniger, insbesondere 5 zu 1 oder weniger, vorzugsweise bei 3 zu 1 oder weniger liegt, wobei vorteilhaft jeweils die Untergrenze bei 1 zu 2 liegt.

Überraschend wurde zusätzlich gefunden, dass durch Zugabe einer tertiären Aminoverbindung, insbesondere eines tert.-Aminophenols (welches vorzugsweise Komponente (b) zugesetzt ist), insbesondere eines 2,4,6-Tris(di-C₁-C₆-alkylamino)phenols, vorzugsweise von 2,4,6-Tris(dimethylamino)phenol, vorzugsweise in einem Anteil von bis zu 30 Gewichtsprozent, beispielsweise in einer möglichen bevorzugten Ausführungsform der Erfindung von 0,01 bis 20 %, bezogen auf die härtbaren Komponenten in (a) (Epoxidharze und ggf. Reaktivverdünner), die Glasumwandlungstemperatur (Temperatur, oberhalb derer das feste, glasartige in ein

weicheres, gummiartiges Material übergeht), die ein Maß für die Verwendbarkeit der ausgehärteten Mörtel bei hohen Temperaturen darstellt, weiter erhöht und somit die Einsatzfähigkeit auch bei hohen Temperaturen weiter gesteigert werden kann, so dass erfindungsgemäße Mehrkomponentenkits mit einem derartigen Zusatz ein weiterer sehr bevorzugter Gegenstand der vorliegenden Erfindung sind.

In Komponente (a) beinhaltete härtbare Epoxidharze sind vorzugsweise Polyglycidylether von mindestens einem mehrwertigen Alkohol oder Phenol, wie Novolak, Bisphenol F oder insbesondere Bisphenol A, oder Gemische solcher Epoxide. Die Epoxiddharze haben ein Epoxidäquivalent von 120 bis 2000, vorzugsweise 150 bis 400. Der Anteil an der Epoxidkomponente (a) beträgt >0 bis 100 %, vorzugsweise 10 bis 60 %

Neben den bisher genannten Bestandteilen können die erfindungsgemäßen Mehrkomponentenkits, wie vor- und nachstehend erwähnt, noch weitere übliche Zusätze beinhalten (wobei dem Fachmann bekannt ist, inwieweit solche Bestandteile mit den in Komponenten eines erfindungsgemäßen Mehrkomponentenkits, wie insbesondere eines Zweikomponentenkits mit den Komponenten (a) und (b), nicht vor der Mischung bei der Anwendung in Berührung kommen dürfen).

Hierzu zählen insbesondere eine oder mehrere Zusätze ausgewählt aus Reaktivverdünnern, Weichmachern, Stabilisatoren, Antioxidantien, Härtungskatalysatoren, Rheologiehilfsmitteln, Thixotropiermitteln, Steuerungsmitteln für die Reaktionsgeschwindigkeit, Netzmitteln, färbenden Zusätzen und Füllstoffen oder ferner weiteren Additiven.

Als Reaktivverdünner (die nicht in einer Härterkomponente vorliegen sollten, also vorzugsweise (bei einem Zweikomponentensystem nur) in Komponente (a) mit beinhaltet sind), finden Glycidylether von aliphatischen, cycloaliphatischen, araliphatischen oder aromatischen Mono- oder insbesondere Polyalkoholen Verwendung, wie Monogylcidylether, z.B. o-Kresylglycidylether, und/oder insbesondere Glycidylether mit einer Epoxy-Funktionalität von mindestens, 2, wie 1,4-Butandioldiglycidylether, Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether, oder ferner Mischungen von zwei oder mehr dieser Reaktivverdünner, Verwendung, vorzugsweise Triglycidylether. Die Reaktivverdünner liegen, bezogen auf das Gesamtgewicht der Epoxidkomponente (a), vorzugsweise in Mengen von 0 bis 60 Gew.-%, insbesondere von 1 bis 20 Gew.-%, vor.

Als Füllstoffe finden übliche Füllstoffe, insbesondere Zemente, Kreiden, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon. Die Füllstoffe können in einer oder mehr Komponenten eines erfindungsgemäßen Mehrkomponentenkits, beispielsweise einer oder beiden Komponenten (a) und (b) eines entsprechenden Zweikomponentenkits, vorliegen; der Anteil, bezogen auf das Gesamtgewicht der härtbaren Masse, beträgt vorzugsweise 0 bis 70 Gew.-%, vorzugsweise 5 bis 55 Gew.-%.

Als weitere Zusätze können Weichmacher, nicht reaktive Verdünnungsmittel oder Fleixibilisatoren, Stabilisatoren, Härtungskatalysatoren, Rheologiehilfsmittel, Thixotropiermittel, Steuerungsmittel für die Reaktionsgeschwindigkeit, Netzmittel, färbende Zusätze, wie Farbstoffe oder insbesondere Pigmente, beispielsweise zum unterschiedlichen Anfärben der Komponenten zur besseren Kontrolle von deren Durchmischung, oder Additive, oder dergleichen, oder Gemische von zwei oder mehr davon, beinhaltet sein. Derartige weitere Zusätze können vorzugsweise insgesamt, bezogen auf die gesamte härtbare Masse, in Gewichtsanteilen von insgesamt 0 bis 30 % vorliegen.

Die Erfindung betrifft in einer ganz besonders bevorzugten Ausführungsform die Verwendung einer Mannichbasenformulierung, die Mannichbasen H-Äquivalente im Bereich von 40 bis 80, bei Messung mit einem Brookfield Rotationsviskosimeter mit Spindel 3 bei 23 °C und bei 10 bis 50 U/min eine Viskosität im Bereich von 500 bis 2700 mPas und einen Gehalt an freien Phenolderivaten von 20 Gew.-% oder weniger hat, zur Herstellung von Härtern für Epoxidharze mit vergrößertem Verarbeitungstemperaturbereich und zur Erhöhung der Verbundspannung im ausgehärteten Zustand auch bei hohen Temperaturen, beispielsweise bei 70 bis 80 °C. Bevorzugt ist die Verwendung oben genannter (insbesondere wie vorstehend weiter als bevorzugt beschriebenen) Mannichbasenformulierungen in einem oben und unten als bevorzugt gekennzeichneten Mehrkomponentenkit (wobei die entsprechende Mannichbasenformulierung auch erst durch Mischung einzelner oder mehrerer ihrer Komponenten (Mannichbase(n), freie(s) Polyamin(e), Flexibilisator(en)) mit eventuellen weiteren Bestandteilen der Härterkomponente (b) vervollständigt werden kann, also in freier Form gar nicht existiert).

In einer weiteren bevorzugten Ausführungsform betrifft die Erfindung die Verwendung einer tertiären Aminoverbindung, vorteilhaft eines tert-Aminophenols (welches vorzugsweise Komponente (b) zugesetzt ist), insbesondere eines 2,4,6-Tris(di-C₁-C₆-alkylamino)phenols, vorzugsweise von 2,4,6-Tris(dimethylamino)phenol, in (insbesondere erfindungsgemäß verwendete Mannichbasenformulierungen beinhaltenden) Härterkomponenten (b) als Bestandteil von (insbesondere Mehr-, wie Zweikomponenten-) Epoxidmörteln.

Die Verbundspannung wird ermittelt durch Auszugsversuche von Ankerstangen M12 aus Beton mit einer Setztiefe von 95 mm.

Der zulässige Temperaturbereich für das ausgehärtete Produkt wird ebenfalls durch Auszugsversuch bestimmt.

Die Messung der Glasumwandlungstemperatur erfolgt mittels DSC in Anlehnung an ISO 3146 an Proben, die 24 h ausgehärtet und 30 min bei 80 °C getempert werden.

Die Erfindung betrifft in weiteren zweckmäßigen Ausführungsformen auch die Verwendung von erfindungsgemäßen Mehr-, insbesondere Zweikomponentenkits zur Befestigung von Fasern, Gelegen, Geweben oder Composites, insbesondere aus hochmoduligen Fasern, vorzugsweise aus Kohlefasern, insbesondere zur Verstärkung von Bauwerken, beispielsweise von Wänden oder Decken oder Böden; oder ferner zur Befestigung von Bauteilen, wie Platten oder Blöcken, z.B. aus Stein, Glas oder Kunststoff, an Bauten oder Bauteilen; jedoch insbesondere zur Befestigung von Verankerungsmitteln, wie Ankerstangen, Bolzen oder dergleichen in Aussparungen, wie Bohrlöchern, wobei man die Komponenten des Mehrkomponentenkits nach vorherigem Mischen und/oder unter Mischen (beispielsweise mittels eines Statikmischers oder durch Zerstören einer Patrone oder eines Folienbeutels oder durch Mischen von Komponenten aus mehrkammerigen Eimern oder Sets von Eimern) und auf die Oberfläche oder im Falle von Verankerungsmitteln in Aussparungen, wie Bohrlöcher, eines Substrates verbringt.

Beispiele: Die nachfolgenden Beispiele dienen der Illustration der Erfindung, ohne ihren Umfang einzuschränken:

### Beispiel 1: Mit erfindungsgemäß zu verwendenden Mannichbasen und als Vergleichsversuche mit bekannten Mannichbasen erhaltene Mörtel:

a) Entsprechend der Zusammensetzung der nachfolgend genannten Komponenten werden durch Mischen Mörtel hergestellt und dann wie oben beschrieben die jeweils nach Härten resultierenden Verbundspannungen ermittelt (Angaben der "Teile" sind Angaben der Gewichtsanteile bezogen auf die Mischung ohne Mannichbasenhärter):
   Epoxidkomponente (A):
      a) 100 Teile Standard-Epoxidharz auf Basis von Bisphenol-A/F mit einem Epoxidäquivalent von 169 bis 181 (D.E.R. 351 der Firma The Dow Chemical Company, Schwalbach, Deutschland)
      b) 20 Teile eines Reaktivverdünners mit einem Epoxidäquivalent von 140 bis 150 (R 12 der Firma UPPC AG, Mietingen-Baltringen, Deutschland)
      c) 90 Teile Dyckerhoff Portlandzement CEM I.

### Härterkomponente (B):

a) Mannichbasenformulierung wie in der nachfolgenden Tabelle angegeben als Härter.

Die Mischungsstöchiometrie ist durch die Epoxid-Äquivalentwerte und die H-Äquivalente rechnerisch festgelegt.

Als Maß für die Hochtemperaturstabilität der ausgehärteten Mörtel von ausgehärteten Mörteln mit oder ohne die in der nachfolgenden Tabelle angegebenen Zusätzen an TDAP wird die Glasübergangstemperatur in °C verwendet.

**Tabelle:**

| Verbundspannungen bei Verwendung unterschiedlicher Mannichbasenformulierungen | | | | | |
|---|---|---|---|---|---|
| Mannichbasenformulierung als Härterkomponente | Gehalt an freien Phenolderivaten [Gew.-%] | H-Äquivalent | Viskosität mPa·s] | Verbundspannung [N/mm²] bei -5 °C Aushärtung 96h bei -5 °C | Verbundspannung [N/mm²] bei 80 °C (Aushärtung 12h bei 20 °C) |
| nach Beispiel 2 (erfindungsgemäß)* | 15 | 52 | 1800 | 30 | 21 |
| Epicure 197 | 30-40 | 75 | 250-350 | 30 | 5 |
| Aradur 2992 | n.g. | 55 | 25-30 | 29 | 6 |
| Rütadur H91 | n.g. | 53,5 | 800-900 | 9 | 9 |
| Epicure 3282 | 25 | 38 | 5500-6500 | 12 | 15 |

| | | | | | |
|---|---|---|---|---|---|
| *) Gehalt an freiem Amin 40-50 %. n.g. = nicht gemessen Epikure 197 und Epicure 3282 sind Warenzeichen der Resolution Performance Products, IIc., Resolution Europe B.V., AN Hoogvliet Rt, Niederlande; Aradur 2992 ist ein Warenzeichen der Fa. Huntsman, Everberg, Belgien (früher Vantico AG, Basel, Schweiz); Rütadur H91 ist ein Warenzeichen der Bakelite AG, Iserlohn, Deutschland, Gehalt an freiem Amin < 25 %. | | | | | |

Die Messung der Viskosität erfolgt bei 23 °C mit einem Brookfield Rotationsviskosimeter Spindel 3, 10 U/min.

Aus der Tabelle geht hervor, dass die erfindungsgemäß zugesetzten Mannichbasenformulierungen bewirken, dass die Mörtel besonders hohe Temperaturen nach Aushärtung ertragen können, ohne dass die Verbundspannung nachlässt, und in einem Fall eine vergleichbare, sonst eine bessere Verbundspannung bei Anwendung bei niedrigen Temperaturen als die Vergleichsmörtel ergeben.

b) Unter Verwendung ansonsten der selben Verhältnisse von Komponenten wie vorstehend unter a) angegeben und der in der Tabelle als erfinderisch angegebenen Mannichbasenformulierung wird nachfolgend die Glasumwandlungstemperatur bei Zugabe unterschiedlicher Mengen von 2,4,6-tris(Dimethylamino)phenol (Air Products Nederland B.V:, Utrecht, Niederlande), nachfolgend TDAP, zur Mannichbasenformulierung bei verschiedenen TDAP-Gehalten (angegeben in Gew.-% bezogen auf die härtbaren Substanzen in Komponente (A))ermittelt.

**Tabelle:**

| Glasumwandlungstemperaturen bei unterschiedlichen TDAP-Gehalten | |
|---|---|
| Ausgang von härtbarer Masse mit Mannichbasenformulierung nach Beispiel 2 (erfindungsgemäß): Gehalt an TDAP [Gew.-%] | Glasübergangstemperatur [° C] |
| 0 | 77 |
| 1,5 | 88 |
| 5 | 97 |
| 10 | 103 |

Es zeigt sich, dass der Zusatz von TDAP zu einer deutlichen Erhöhung der Glastemperatur führt, so dass Zusammensetzungen mit TDAP eine besonders bevorzugte Ausführungsform der Erfindung darstellen.

### Beispiel 2: Herstellung einer erfindungsgemäß zu verwendenden Mannichbase

400 Gewichtsteile Diphenylolpropan (Bisphenol A) werden geschmolzen vorgelegt und 240 Teile m-Xylylendiamin (MXDA) untergerührt. Die Mischung wird auf ca. 80 °C abgekühlt, und es werden 145 Teile Formaldehyd 36%ig unter Rühren zugegeben. Unter kontinuierlicher Verringerung des Drucks bei gleichzeitiger Erwärmung auf maximal 110 °C wird das Wasser abdestilliert. Die so erhaltene Mannichbase wird mit weiterem m-Xylylendiamin sowie gegebenenfalls Benzylalkohol auf eine erfindungsgemäße Mannichbasenformulierung verdünnt, beispielsweise zu einer Zubereitung mit ungefähr 50 Gew.-% MXDA, ungefähr 15 Gew.-% freier Phenolkomponente und ca. 10 Gew.-% Benzylalkohol. Charakteristika der Zusammensetzung lassen sich auch der ersten Tabelle in Beispiel 1 entnehmen.

## Patentansprüche

1. Mehrkomponentenkit für eine härtbare Masse für Befestigungszwecke umfassend eine Epoxidharzkomponente (a); die härtbare Epoxide beinhaltet, und eine Härterkomponente (b), welche eine Mannichbasenformulierung umfasst, **dadurch gekennzeichnet, dass** die Mannichbasenformulierung H-Äquivalente im Bereich von 40 bis 80, bei Messung mit einem Brookfield Rotationsviskosimeter mit Spindel 3 bei 23 °C und bei 10 bis 50 U/min eine Viskosität im Bereich von 500 bis 2700 mPas und einen Gehalt an freien Phenolderivaten von 20 Gew.-% oder weniger hat.

2. Mehrkomponentenkit nach Anspruch 1, insbesondere Zweikomponentenkit, **dadurch gekennzeichnet, dass** die Mannichbasenformulierung einen Gehalt an freien Aminen von 35 Gew.-% oder mehr hat.

3. Mehrkomponentenkit nach einem der Ansprüche 1 oder 2, **dadurch gekennzeichnet, dass** die Mannichbasen in der Mannichbasenformulierung einen Anteil von 10,bis 55, vorzugsweise von 15 bis 25 Gew.-% haben.

4. Mehrkomponentenkit nach einem der Ansprüche 1 bis 3, **dadurch gekennzeichnet, dass** in der Mannichbasenformulierung ein Anteil an Flexibilisatoren, insbesondere Benzylakohol, von 20 Gew.-% oder weniger vorliegt.

5. Mehrkomponentenkit nach einem der Anspruch 1 bis 4, **dadurch gekennzeichnet, dass** die Mannichbasen in der Mannichbasenformulierung unter Abreaktion der Phenolderivate von bis auf 20, vorzugsweise 15 Gew.-% der Phenolderivate oder weniger hergestellt sind.

6. Mehrkomponentenkit nach einem der Ansprüche 1 bis 5, **dadurch gekennzeichnet, dass** die Mannichbasen der Mannichbasenformulierungen aus Phenolderivaten, vorzugsweise Bisphenolen, insbesondere Bisphenol A; Polyaminen, vorzugsweise araliphatischen Diaminen, insbesondere m-Xylylendiamin, aliphatischen Aminen und/oder cycloaliphatischen Aminen; und Formaldehyd erhältlich sind.

7. Mehrkomponentenkit nach einem der Ansprüche 1 bis 6, **dadurch gekennzeichnet, dass** bei der Herstellung der Mannichbasen meta-Xylylendiamin, ferner ein aliphatisches oder ein cycloaliphatisches Diamin, oder Kombinationen von zwei oder mehr davon, verwendet werden.

8. Mehrkomponentenkit nach einem der Ansprüche 1 bis 7, **dadurch gekennzeichnet, dass** die Mannichbasenformulierung H-Äquivalente im Bereich von 45 bis 75, bei Messung mit einem Brookfield Rotationsviskosimeter mit Spindel 3 bei 23 °C und bei 10 bis 50 U/min eine Viskosität im Bereich von 1000 bis 2000 mP·as und einen Gehalt an freien Phenolderivaten von 20 Gew.-% oder weniger hat.

9. Mehrkomponentenkit, insbesondere Zweikomponentenkit, nach einem der Ansprüche 1 bis 8, **dadurch gekennzeichnet, dass** das Gewichtsverhältnis der Komponenten (a) zu (b) bei 10 zu 1 oder weniger, insbesondere 5 zu 1 oder weniger, vorzugsweise bei 3 zu 1 oder weniger, wobei vorteilhaft jeweils die Untergrenze bei 1 zu 1 liegt.

10. Mehrkomponentenkit nach einem der Ansprüche 1 bis 9, **dadurch gekennzeichnet, dass** er in Komponente (b) zusätzlich eine tertiäre Aminoverbindung, vorzugsweise ein tert-Aminophenol, insbesondere ein 2,4,6-Tris(di-C₁-C₆-alkylamino)phenol, vorzugsweise 2,4,6-Tris(dimethylamino)phenol, beinhaltet.

11. Verwendung eines Mehrkomponentenkits nach einem der Ansprüche 1 bis 10 zur Befestigung von Verankerungselementen, **dadurch gekennzeichnet, dass** man dessen Komponenten mischt und in Oberflächenvertiefungen eines Substrates einbringt.

12. Verwendung eines Mehrkomponentenkits nach einem der Ansprüche 1 bis 10 zur Befestigung von Fasern, Gelegen, Geweben oder Composites zur Verstärkung von Bauwerken.

13. Verwendung einer Mannichbasenformulierung, die Mannichbasen H-Äquivalente im Bereich von 40 bis 80, bei Messung mit einem Brookfield Rotationsviskosimeter mit Spindel 3 bei 23 °C und bei 10 bis 50 U/min eine Viskosität im Bereich von 500 bis 2700 mPas und einen Gehalt an freien Phenolderivaten von 20 Gew.-% oder weniger hat, zur Herstellung von Härtern für Epoxidharze mit vergrößertem Verarbeitungstemperaturbereich und zur Erhöhung der Verbundspannung im ausgehärteten Zustand auch bei hohen Temperaturen, wobei die entsprechende Mannichbasenformulierung auch erst nach Mischung einzelner oder mehrerer ihrer Komponenten mit weiteren Bestandteilen der Härterkomponente (b) vervollständigt sein kann.

## Claims

1. Multi-component kit for a curable composition for fixing purposes, comprising an epoxy resin component (a), which comprises curable epoxides, and a hardener component (b), which comprises a Mannich base formulation, **characterized in that** the Mannich base formulation has H equivalents in the range from 40 to 80, a viscosity in the range from 500 to 2700 mPa.s when measured with a Brookfield rotary viscometer using spindle 3 at 23°C at from 10 to 50 rev/min, and a content of free phenol derivatives of 20 % by weight or less.

2. Multi-component kit according to claim 1, especially a two-component kit, **characterized in that** the Mannich base formulation has a content of free amines of 35 % by weight or more.

3. Multi-component kit according to either one of claims 1 and 2, **characterized in that** the Mannich bases in the Mannich base formulation are contained in a proportion of from 10 to 55 % by weight, preferably from 15 to 25 % by weight.

4. Multi-component kit according to any one of claims 1 to 3, **characterized in that** flexibilizers, especially benzyl alcohol, are contained in the Mannich base formulation in a proportion of 20 % by weight or less.

5. Multi-component kit according to any one of claims 1 to 4, **characterized in that** the Mannich bases in the Mannich base formulation are prepared with reaction of the phenol derivatives to leave 20 % by weight, preferably 15 % by weight, phenol derivatives or less.

6. Multi-component kit according to any one of claims 1 to 5, **characterized in that** the Mannich bases in the Mannich base formulations are obtainable from phenol derivatives, preferably bisphenols, especially bisphenol A; polyamines, preferably araliphatic diamines, especially m-xylylenediamine, aliphatic amines and/or cycloaliphatic amines; and formaldehyde.

7. Multi-component kit according to any one of claims 1 to 6, **characterized in that** for the preparation of the Mannich bases there are used meta-xylylenediamine, also an aliphatic or a cycloaliphatic diamine, or combinations of two or more thereof.

8. Multi-component kit according to any one of claims 1 to 7, **characterized in that** the Mannich base formulation has H equivalents in the range from 45 to 75, a viscosity in the range from 1000 to 2000 mPa.s when measured with a Brookfield rotary viscometer using spindle 3 at 23°C at from 10 to 50 rev/min, and a content of free phenol derivatives of 20 % by weight or less.

9. Multi-component kit, especially a two-component kit, according to any one of claims 1 to 8, **characterized in that** the ratio by weight of components (a) : (b) is 10 : 1 or less, especially 5 : 1 or less, preferably 3 : 1 or less, the lower limit in each case advantageously being 1 : 1.

10. Multi-component kit according to any one of claims 1 to 9, **characterized in that** it comprises in component (b) additionally a tertiary amino compound, preferably a tert-aminophenol, especially a 2,4,6-tris(di-C₁-C₆alkyiamino)phenol, preferably 2,4,6-tris(dimethylamino)phenol.

11. Use of a multi-component kit according to any one of claims 1 to 10 for fixing anchoring elements, **characterized in that** the components of the kit are mixed together and introduced into cavities in the surface of a substrate.

12. Use of a multi-component kit according to any one of claims 1 to 10 for fixing fibres, scrims, fabrics or composites for the reinforcement of buildings.

13. Use of a Mannich base formulation having Mannich bases with H equivalents in the range from 40 to 80, a viscosity in the range from 500 to 2700 mPa.s when measured with a Brookfield rotary viscometer using spindle 3 at 23°C at from 10 to 50 rev/min, and a content of free phenol derivatives of 20 % by weight or less, for the preparation of hardeners for epoxy resins having an extended processing temperature range and for increasing the bond stress in the cured state even at high temperatures, it also being possible for the Mannich base formulation in question to be complete only once one or more of its components has been mixed with further constituents of the hardener component (b).

## Revendications

1. Kit à plusieurs composants pour une masse durcissable à des fins de fixation, comprenant un composant résine époxyde (a) qui contient des époxydes durcissables, et un composant durcisseur (b) qui comprend une formulation de bases de Mannich, **caractérisé en ce que** la formulation de bases de Mannich présente des équivalents d'hydrogène dans la plage de 40 à 80, une viscosité dans la plage de 500 à 2700 mPas mesurée avec un viscosimètre rotatif Brookfield avec une tige 3 à 23 °C et entre 10 et 50 tr/min et une teneur en dérivés de phénol libres de 20 % en poids ou moins.

2. Kit à plusieurs composants selon la revendication 1, en particulier kit à deux composants, **caractérisé en ce que** la formulation de bases de Mannich a une teneur en amines libres de 35 % en poids ou plus.

3. Kit à plusieurs composants selon l'une des revendications 1 ou 2, **caractérisé en ce que** les bases de Mannich de la formulation de bases de Mannich ont une part de 10 à 55, de préférence de 15 à 25 % en poids.

4. Kit à plusieurs composants selon l'une des revendications 1 à 3, **caractérisé en ce qu'**il existe dans la formulation de bases de Mannich une part de flexibilisateurs, en particulier d'alcool benzylique, de 20 % en poids ou moins.

5. Kit à plusieurs composants selon l'une des revendications 1 à 4, **caractérisé en ce que** les bases de Mannich de la formulation de bases de Mannich sont produites par réaction des dérivés de phénol de jusqu'à 20, de préférence 15 % en poids des dérivés de phénol ou moins.

6. Kit à plusieurs composants selon l'une des revendications 1 à 5, **caractérisé en ce que** les bases de Mannich des formulations de bases de Mannich peuvent être obtenues à partir de dérivés de phénol, de préférence de bisphénols, en particulier de bisphénol A ; de polyamines, de préférence de diamines araliphatiques, en particulier de m-xylylènediamine, d'amines aliphatiques et/ou d'amines cycloaliphatiques ; et de formaldéhyde.

7. Kit à plusieurs composants selon l'une des revendications 1 à 6, **caractérisé en ce que** de la méta-xylylènediamine, plus une diamine aliphatique ou cycloaliphatique, ou une combinaison de deux ou plus de celles-ci, sont utilisées pour la production des bases de Mannich.

8. Kit à plusieurs composants selon l'une des revendications 1 à 7, **caractérisé en ce que** la formulation de bases de Mannich présente des équivalents d'hydrogène dans la plage de 45 à 75, une viscosité dans la plage de 1000 à 2000 mPas mesurée avec un viscosimètre rotatif Brookfield avec une tige 3 à 23 °C et entre 10 et 50 tr/min et une teneur en dérivés de phénol libres de 20 % en poids ou moins.

9. Kit à plusieurs composants, en particulier kit à deux composants, selon l'une des revendications 1 à 8, **caractérisé en ce que** le rapport pondéral des composants (a) et (b) est de 10 à 1 ou moins, en particulier de 5 à 1 ou moins, de préférence de 3 à 1 ou moins, la limite inférieure étant chaque fois de 1 à 1.

10. Kit à plusieurs composants selon l'une des revendications 1 à 9, **caractérisé en ce qu'**il contient dans le composant (b) en plus une liaison amino tertiaire, de préférence un tert-aminophénol, en particulier un 2,4,6-tris(di-C₁-C₆-alkylamino)phénol, de préférence du 2,4,6-tris(diméthylamino)phénol.

11. Utilisation d'un kit à plusieurs composants selon l'une des revendications 1 à 10 pour la fixation d'éléments d'ancrage, **caractérisé en ce que** l'on mélange ses composants et les introduit dans des creux de la surface d'un substrat.

12. Utilisation d'un kit à plusieurs composants selon l'une des revendications 1 à 10 pour la fixation de fibres, nappes, tissus ou composites destinés à renforcer des constructions.

13. Utilisation d'une formulation de bases de Mannich qui présente des équivalents d'hydrogène dans la plage de 40 à 80, une viscosité dans la plage de 500 à 2700 mPas mesurée avec un viscosimètre rotatif Brookfield avec une tige 3 à 23 °C et entre 10 et 50 tr/min et une teneur en dérivés de phénol libres de 20 % en poids ou moins, pour la fabrication de durcisseurs pour résines époxydes à plus grande plage de température de mise en oeuvre et pour augmenter la tension d'adhérence à l'état durci même aux températures élevées, la formulation de bases de Mannich correspondante ne pouvant être complétée qu'après mélange de certains ou de plusieurs de ses composants avec d'autres constituants du composant durcisseur (b).
